# EUROPEAN PATENT APPLICATION

(11) **EP 4 580 017 A1**
(43) Date of publication of application: **02.07.2025**
(21) Application number: 24220584.7
(22) Date of filing: 17.12.2024
(51) Int. Cl.: H02M 1/00, H02M 3/158

(54) **POWER CONVERTER AND CONTROL METHOD**

(30) Priority: 27.12.2023 CN 202311837215
(71) Applicant: Huawei Digital Power Technologies Co., Ltd., Shenzhen, Guangdong 518043 (CN)
(72) Inventor: LIAO, Guohong, 518043 Shenzhen (CN); TANG, Jinwei, 518043 Shenzhen (CN); LI, Kaiyan, 518043 Shenzhen (CN); CHEN, Baoguo, 518043 Shenzhen (CN)
(74) Representative: Gill Jennings & Every LLP

(57) **Abstract**

This application provides a power converter and a control method, so that the power converter can run in a first mode or a second mode by adjusting on and off of a switching component in the power converter. When the power converter runs in the first mode, a peak current flowing through an inductor is higher, and a switching frequency of the switching component is lower; or when the power converter runs in the second mode, a peak current flowing through an inductor is lower, and a switching frequency of the switching component is higher. When an output power of the power converter is less than a first specified power, a current output by the power converter is small, and the power converter runs in the first mode; or when an output power of the power converter is greater than or equal to a first specified power, a current output by the power converter increases, and the power converter runs in the second mode. In this way, a running mode of the power converter can be selected based on the output power of the power converter, so as to reduce the switching frequency of the switching component, thereby reducing a loss; and further reduce the peak current, thereby reducing a volume and costs of the inductor.

## Description

### TECHNICAL FIELD

This application relates to the power electronics field, and in particular, to a power converter and a control method.

### BACKGROUND

With the continuous development of electric power technologies, a requirement for a switch-mode power supply is increasingly high, and a voltage range and a power range of a load connected to the switch-mode power supply are gradually broadened. A power converter in the switch-mode power supply includes a switching component, an inductor, a capacitor, and the like. In consideration of voltage withstand and through-current characteristics, in most cases, an IGBT is selected as the switching component in the power converter. When the load is at a high power and a high voltage, an upper limit of a switching frequency of the IGBT cannot meet requirements of the high power and the high voltage on the switching frequency. The upper limit of the switching frequency is a maximum frequency at which the switching component can stably perform on and off operations under a working condition. If the switching component works at a frequency higher than the upper limit of the switching frequency, the switching component may not be effectively switched and a loss may increase. In addition, when the load is at the high power and the high voltage, a peak current flowing through the inductor also increases accordingly. Therefore, an inductor component with a larger inductance value needs to be disposed in the power converter, to meet a higher peak current. However, as an inductance value increases, a volume and costs of the inductor increase.

Therefore, in a larger load power change range, problems of an increase in the loss and increases in the volume and the costs of the inductor in the power converter that are generated because the switching component of the power converter cannot meet the requirements of the high power and the high voltage on the switching frequency, need to be resolved urgently.

### SUMMARY

This application provides a power converter and a control method, to adjust a running mode of the power converter based on a value of an output power of the power converter, so as to reduce a switching frequency of a switching component of the power converter as much as possible, thereby reducing a loss; and reduce a peak current flowing through an inductor in the power converter, thereby reducing a volume and costs of the inductor.

According to a first aspect, this application provides a power converter. The power converter includes a first switching component, a second switching component, a third switching component, a fourth switching component, and an inductor. A first end of the first switching component is connected to a positive electrode of an input end of the power converter, a second end of the second switching component is connected to a negative electrode of the input end of the power converter, a first end of the third switching component is connected to a positive electrode of an output end of the power converter, a second end of the fourth switching component is connected to a negative electrode of the output end of the power converter, a second end of the first switching component is connected to a first end of the second switching component, a second end of the third switching component is connected to a first end of the fourth switching component, a first end of the inductor is connected to the second end of the first switching component, and a second end of the inductor is connected to the second end of the third switching component; and when an output power of the power converter is less than a first specified power, the power converter runs in a first mode, where the first mode includes a plurality of first periods, and each first period includes a first time period and a second time period; in the first time period of the first period, the first switching component and the fourth switching component are turned on, and the second switching component and the third switching component are turned off; and in the second time period of the first period, the first switching component and the third switching component are turned on, and the second switching component and the fourth switching component are turned off; or when an output power of the power converter is greater than or equal to a first specified power, the power converter runs in a second mode, where the second control mode includes a plurality of second periods, and each second period includes a first time period, a second time period, and a third time period; in the first time period of the second period, the first switching component and the fourth switching component are turned on, and the second switching component and the third switching component are turned off; in the second time period of the second period, the first switching component and the third switching component are turned on, and the second switch component and the fourth switching component are turned off; and in the third time period of the second period, the second switching component and the third switching component are turned on, and the first switching component and the fourth switching component are turned off.

On the premise that a value of an output voltage output by the power converter to a voltage output device remains unchanged and output powers of the power converter are the same, the power converter running in the first mode is compared with the power converter running in the second mode. A peak current flowing through the inductor in the power converter running in the first mode is higher, and a switching frequency of each switching component is lower. A peak current flowing through the inductor in the power converter running in the second mode is lower, and a switching frequency of each switching component is higher. In conclusion, when the output power of the power converter is less than the first specified power, a current that the power converter needs to output is small. Therefore, the power converter runs in the first mode. The switching frequency of each switching component in the power converter working in the first mode is very low, and the peak current flowing through the inductor is not very large. When the output power of the power converter is greater than or equal to the first specified power, the current that the power converter needs to output also increases. Therefore, when the power converter runs in the second mode, the switching frequency of each switching component in the power converter working in the second mode is not very high, and even if the current that needs to be output by the power converter increases, the peak current flowing through the inductor is not very high.

In this way, in this application, the power converter can be selected, based on the output power of the power converter, to run in the first mode or the second mode, so as to reduce a switching frequency of a switching component as much as possible, thereby reducing a loss; and reducing the peak current flowing through the inductor, thereby reducing a volume and costs of the inductor

In a possible implementation, when the output power of the power converter is greater than or equal to the first specified power and less than a second specified power, the second period further includes a fourth time period; and in the fourth time period, the first switching component and the third switching component are turned off, and the second specified power is greater than the first specified power. To reduce the switching frequency of the switching component in the power converter, the fourth time period is set in the second period. In this way, an interval duration of on/off of the switching component in the power converter increases, and therefore the switching frequency of the switching component in the power converter is reduced, so as to meet requirements of a high power and a high voltage on the switching frequency of the switching component, thereby reducing a loss of the switching component.

In a possible implementation, the fourth switching component is an insulated gate bipolar transistor IGBT; and in the fourth time period, the second switching component is turned on, and the first switching component, the third switching component, and the fourth switching component are turned off. The turned-on second switching component and a fourth synchronization diode are freewheeled, so that electric energy stored on the inductor does not change.

In a possible implementation, the fourth switching component is a metal-oxide-semiconductor field-effect transistor MOS; and in the fourth time period, the second switching component and the fourth switching component are turned on, and the first switching component and the third switching component are turned off. The turned-on second switching component and the fourth switching component are freewheeled, so that the electric energy stored on the inductor does not change.

In a possible implementation, the third time period of the second period includes a first sub-time period and a second sub-time period, and the second period further includes a fifth time period; in the first sub-time period, the inductor discharges in a first direction, where the first direction is a direction from the second end of the first switching component to the second end of the third switching component; in the second sub-time period, the inductor is charged in a second direction, where the second direction is a direction from the second end of the third switching component to the second end of the first switching component; and in the fifth time period of the second period, the inductor discharges in the second direction.

In the first sub-time period, the inductor charges the voltage output device; and in the second sub-time period, the voltage output device charges the inductor. Based on an inductor charging direction of the second sub-time period, the inductor in the fifth time period continues to discharge in the second direction. In a dead time between two adjacent second periods, the inductor charges a parasitic capacitance of the second switching component, and a voltage of the parasitic capacitance of the second switching component gradually increases until the voltage is the same as an input voltage of a voltage input device. Because voltages at two ends of the first switching component are the same, the voltages at the two ends of the first switching component are zero, so that the first switching component can be softly turned on, thereby reducing on a loss.

In a possible implementation, the inductor charges the parasitic capacitance of the second switching component in the fifth time period of the second period; and when the fifth time period of the second period ends, the voltage of the parasitic capacitance is the same as the input voltage.

In a possible implementation, durations of first time periods of any two second periods are the same, durations of second time periods of the any two second periods are the same, durations of third time periods of the any two second periods are the same, durations of fourth time periods of the any two second periods are the same, and durations of fifth time periods of the any two second periods are the same. In this way, the power converter is about to run at a fixed frequency. The power converter controlled by using the fixed frequency can simplify a circuit design and a control policy, and can provide more stable output than the power converter controlled by using a variable frequency.

In a possible implementation, in response to an increase of the output power of the power converter to the first specified power, after a currently running first period of the power converter ends, the first switching component, the second switching component, the third switching component, and the fourth switching component are turned off for a specified duration; and the power converter runs in the second mode after the specified duration.

In consideration that the power converter may have other control factors such as a residual charge and a residual magnetic field that are not completely released, when the output power of the power converter increases to the first specified power, the first switching component, the second switching component, the third switching component, and the fourth switching component need to be turned off for the set duration after the currently running first period is completed, and then a running mode of the power converter is switched to the second mode, to ensure that the related charge and magnetic field are discharged, so as to avoid problems such as electromagnetic interference generated in a running mode switching process.

In a possible implementation, in response to a decrease of the output power of the power converter to a third specified power, after a currently running second period of the power converter ends, the first switching component, the second switching component, the third switching component, and the fourth switching component are turned off for a specified duration; and the power converter runs in the first mode after the specified duration, where the third specified power is the first specified power minus a first threshold.

In consideration that the power converter may have other control factors such as the residual charge and the residual magnetic field that are not completely released, when the output power of the power converter decreases to the third specified power, the first switching component, the second switching component, the third switching component, and the fourth switching component need to be turned off for the set duration after the currently running second period is completed, and then the running mode of the power converter is switched to the first mode, to ensure that the related charge and magnetic field are discharged, so as to avoid the problems such as electromagnetic interference generated in the running mode switching process.

In a possible implementation, when the output power of the power converter is less than the first specified power and an output voltage of the power converter is not less than an input voltage, the power converter runs in the first mode, where the first mode includes the plurality of first periods, and each first period includes the first time period and the second time period; in the first time period of the first period, the first switching component and the fourth switching component are turned on, and the second switching component and the third switching component are turned off; and in the second time period of the first period, the first switching component and the third switching component are turned on, and the second switching component and the fourth switching component are turned off; or when the output power of the power converter is less than the first specified power and an output voltage of the power converter is less than an input voltage, the power converter runs in a third mode, where the third mode includes a plurality of third periods, and each third period includes a first time period and a second time period; in the first time period of the third period, the first switching component and the third switching component are turned on, and the second switching component and the fourth switching component are turned off; and in the second time period of the third period, the second switching component and the third switching component are turned on, and the first switching component and the fourth switching component are turned off.

When the output power of the power converter that is output by the power converter to the voltage output device is less than the first specified power, and the output voltage of the power converter that is output by the power converter to the voltage output device is not less than the input voltage, this application enables the power converter to work in a boost state of the first mode. When the output power of the power converter that is output by the power converter to the voltage output device is less than the first specified power, and the output voltage of the power converter that is output by the power converter to the voltage output device is less than the input voltage, the power converter is enabled to work in a buck state of the third mode.

In a possible implementation, the power converter further includes a control circuit. The control circuit is configured to: when the output power of the power converter is less than the first specified power, control the power converter to run in the first mode; or when the output power of the power converter is greater than or equal to the first specified power, control the power converter to run in the second mode. The control circuit controls the first switching component, the second switching component, the third switching component, and the fourth switching component, to control the power converter to work in the first mode, the second mode, or the third mode.

According to a second aspect, this application provides a power converter control method, applied to a power converter. The method includes: when an output power of the power converter is less than a first specified power, controlling the power converter to run in a first mode, where the first mode includes a plurality of first periods, and each first period includes a first time period and a second time period; in the first time period of the first period, a first switching component and a fourth switching component are turned on, and a second switching component and a third switching component are turned off; and in the second time period of the first period, the first switching component and the third switching component are turned on, and the second switching component and the fourth switching component are turned off; or when an output power of the power converter is greater than or equal to a first specified power, controlling the power converter to run in a second mode, where the second control mode includes a plurality of second periods, and each second period includes a first time period, a second time period, and a third time period; in the first time period of the second period, a first switching component and a fourth switching component are turned on, and a second switching component and a third switching component are turned off; in the second time period of the second period, the first switching component and the third switching component are turned on, and the second switching component and the fourth switching component are turned off; and in the third time period of the second period, the second switching component and the third switching component are turned on, and the first switching component and the fourth switching component are turned off.

In a possible implementation, when the output power of the power converter is greater than or equal to the first specified power and less than a second specified power, the second period further includes a fourth time period; and in the fourth time period, the first switching component and the third switching component are turned off, and the second specified power is greater than the first specified power.

In a possible implementation, the third time period of the second period includes a first sub-time period and a second sub-time period, and the second period further includes a fifth time period; in the first sub-time period, an inductor discharges in a first direction, where the first direction is a direction from a second end of the first switching component to a second end of the third switching component; in the second sub-time period, the inductor is charged in a second direction, where the second direction is a direction from the second end of the third switching component to the second end of the first switching component; in the fifth time period of the second period, the inductor discharges in the second direction; and a first end of the first switching component is connected to a positive electrode of an input end of the power converter, a second end of the second switching component is connected to a negative electrode of the input end of the power converter, a first end of the third switching component is connected to a positive electrode of an output end of the power converter, a second end of the fourth switching component is connected to a negative electrode of the output end of the power converter, the second end of the first switching component is connected to a first end of the second switching component, the second end of the third switching component is connected to a first end of the fourth switching component, a first end of the inductor is connected to the second end of the first switching component, and a second end of the inductor is connected to the second end of the third switching component.

In a possible implementation, the inductor charges a parasitic capacitance of the second switching component in the fifth time period of the second period; and when the fifth time period of the second period ends, a voltage of the parasitic capacitance is the same as an input voltage.

### BRIEF DESCRIPTION OF DRAWINGS

FIG. 1 is a diagram of an intersection area of a voltage and a current;
FIG. 2 is a diagram of a structure of a power converter according to this application;
FIG. 3 is a connection diagram of a power converter according to this application;
FIG. 4 is a timing diagram of states of switching components of a power converter running in a first mode;
FIG. 5A and FIG. 5B are timing diagrams of states of switching components of a power converter running in a first mode;
FIG. 6 is a timing diagram of states of switching components of a power converter running in a third mode;
FIG. 7A and FIG. 7B are timing diagrams of states of switching components of a power converter running in a third mode;
FIG. 8 is a timing diagram 1 of states of switching components of a power converter running in a second mode;
FIG. 9A to FIG. 9D are timing diagrams 1 of states of switching components of a power converter running in a second mode;
FIG. 10 is a timing diagram 2 of states of switching components of a power converter running in a second mode;
FIG. 11 is a timing diagram 3 of states of switching components of a power converter running in a second mode;
FIG. 12 is a timing diagram 4 of states of switching components of a power converter running in a second mode;
FIG. 13 is a timing diagram 5 of states of switching components of a power converter running in a second mode;
FIG. 14 is a timing diagram 2 of states of switching components of a power converter running in a second mode;
FIG. 15 is a timing diagram 1 of a power converter in a mode switching state;
FIG. 16 is a timing diagram 2 of a power converter in a mode switching state;
FIG. 17 is a timing diagram 3 of a power converter in a mode switching state;
FIG. 18 is a timing diagram 4 of a power converter in a mode switching state;
FIG. 19 is a diagram of a structure of an energy storage system; and
FIG. 20 is a diagram of a structure of a photovoltaic system.

### DESCRIPTION OF EMBODIMENTS

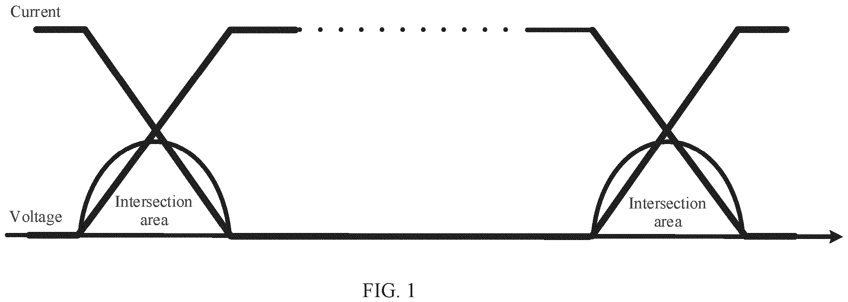

The following first describes some terms in embodiments of this application to help a person skilled in the art have a better understanding.
(1) A turn-on loss is a loss generated when a switching component is switched from off to on.
(2) Hard turn-on is a process in which a voltage and a current on a switching component are large when the switching component is turned on. Because switching between states of the switching component requires a specific time, there is an intersection area of the voltage and the current in a specific time period during which the switching component switches between an off state and an on state. FIG. 1 is a diagram of an intersection area of a voltage and a current. When a switching component is hard turned on, a loss of the switching component caused by the intersection is large, and is referred to as a hard turn-on loss of the switching component.
(3) Soft turn-on is to turn on a switching component when a voltage or a current on the switching component is zero. Although switching between states of the switching component requires a specific time, and there is an intersection area between a voltage and a current during state switching, a product (power) of the voltage and the current is close to zero during state switching of the switching component, and a loss of the switching component caused by the intersection is small.

The following further describes in detail this application with reference to accompanying drawings. A specific operation method in a method embodiment may also be applied to an apparatus embodiment or a system embodiment. It should be noted that in description of this application, "at least one" means one or more, and "a plurality of means two or more. In view of this, in embodiments of the present invention, "a plurality of" may also be understood as "at least two". The term "and/or" describes an association relationship for describing associated objects and represents that three relationships may exist. For example, A and/or B may represent the following three cases: Only A exists, both A and B exist, and only B exists. In addition, unless otherwise specified, the character "/" generally indicates an "or" relationship between the associated objects. In addition, it should be understood that in description of this application, terms such as "first" and "second" are merely used for distinguishing and description, but should not be understood as indicating or implying relative importance, or should not be understood as indicating or implying a sequence

It should be noted that, in embodiments of this application, "connection" means an electrical connection, and a connection between two electrical elements may be a direct or indirect connection between the two electrical elements. For example, a connection between A and B may be a direct connection between A and B, or may be an indirect connection between A and B through one or more other electrical elements. For example, that A is connected to B may alternatively be that A is directly connected to C, C is directly connected to B, A and B are connected through C.

Currently, a power converter in a switch-mode power supply is mostly controlled in a single control manner, and used control manners include but are not limited to buck, boost, and T-shaped three-level control manners. If the power converter is always controlled in the single control manner, after a voltage range and a power range of a load connected to the switch-mode power supply are gradually widened, the high-power and high-voltage load in a wide range has a higher requirement on an upper limit of a switching frequency of a switching component of the power converter, and the high-power and high-voltage load further increases a peak current flowing through an inductor in the power converter.

If the switching component in the power converter can always be turned on in a soft turn-on manner, working efficiency of the power converter can be further improved. However, if the load is at high power and high voltage, because the switching frequency of the switching component is required to be excessively high, the power converter cannot turn on the switching component in the power converter in the soft turn-on manner. Therefore, an excessively high loss of the switching component still exists.

In addition, to meet a higher peak current, an inductor with a larger inductance value needs to be designed in the power converter, so that a volume and costs of the inductor are increased.

In view of this, this application provides a power converter, to adjust a running mode of the power converter based on a value of an output power of the power converter, so as to reduce a switching frequency of a switching component of the power converter as much as possible, thereby reducing a loss; and reducing a peak current flowing through an inductor in the power converter, thereby reducing a volume and costs of the inductor.

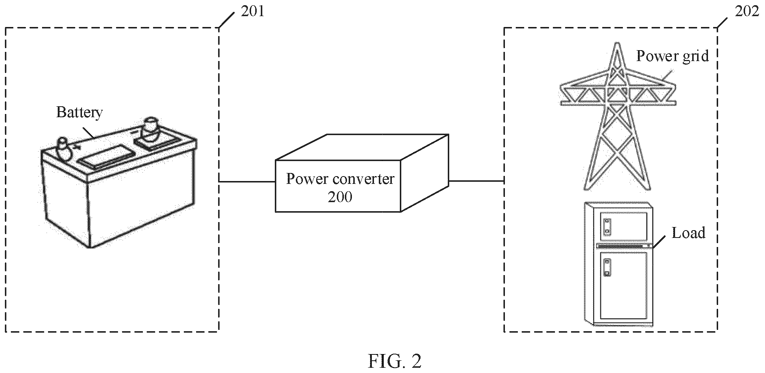

FIG. 2 is a connection diagram of a power converter according to this application. As shown in FIG. 2, a power converter 200 is connected between a voltage input device 201 and a voltage output device 202. It should be understood that the power converter 200 is configured to adjust a voltage input by the voltage input device 201 and output an adjusted voltage to the voltage output device 202.

Optionally, in some scenarios, the voltage input device 201 may be a power adapter, and the voltage output device 202 may be a battery. The power converter 200 may receive an input voltage output by the power adapter, and may convert the input voltage output by the power adapter into an output voltage of the power converter 200, to charge the battery.

Optionally, in some other scenarios, the voltage input device 201 may be a battery, and the voltage output device 202 may be a power-consuming device. The power converter 200 may receive an input voltage output by the battery, and convert the input voltage output by the battery into an output voltage of the power converter 200, to supply power to the power-consuming device.

In this embodiment of this application, the power converter 200 may include a plurality of switching components and an inductor element. The plurality of switching components are turned on and off and energy of the inductor element is stored, so that the input voltage input by the voltage input device 201 can be converted into the output voltage of the power converter 200, and the output voltage of the power converter 200 can be provided to the voltage output device 202.

It may be understood that, when the power converter 200 performs buck conversion, the input voltage of the voltage input device 201 connected to the power converter 200 is greater than the output voltage of the power converter 200 that is output to the voltage output device 202. When the power converter 200 performs boost conversion, the input voltage of the voltage input device 201 connected to the power converter 200 is less than the output voltage of the power converter 200 that is output to the voltage output device 202.

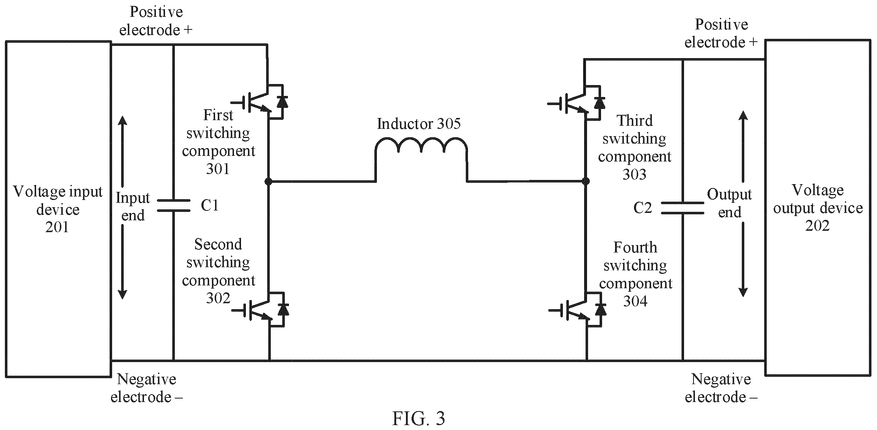

FIG. 3 is a diagram of a structure of a power converter according to this application. In this embodiment of this application, a power converter 200 includes a first switching component 301, a second switching component 302, a third switching component 303, a fourth switching component 304, and an inductor 305.

A voltage input device 201 is configured to be connected to an input end of the power converter 200, and a voltage output device 202 is configured to be connected to an output end of the power converter 200.

In this embodiment of this application, an input end of the first switching component 301 is connected to the input end of the power converter 200, an output end of the second switching component 302 is connected to a negative electrode of the input end of the power converter 200, an input end of the third switching component 303 is connected to a positive electrode of the output end of the power converter 200, an output end of the fourth switching component 304 is connected to a negative electrode of the output end of the power converter 200, an output end of the first switching component 301 is connected to an input end of the second switching component 302, and an output end of the third switching component 303 is connected to an input end of the fourth switching component 304.

The power converter 200 may further include a first synchronization diode, a second synchronization diode, a third synchronization diode, and a fourth synchronization diode. The first synchronization diode is connected in parallel to the first switching component 301, the second synchronization diode is connected in parallel to the second switching component 302, the third synchronization diode is connected in parallel to the third switching component 303, and the fourth synchronization diode is connected in parallel to the fourth switching component 304.

The first switching component 301 is used as an example. In this case, the input end of the first switching component 301 may be further connected to a cathode of the first synchronization diode, and the output end of the first switching component 301 may be further connected to an anode of the first synchronization diode. For a connection relationship of another switching component, refer to the descriptions of the first switching component 301 and the first synchronization diode. Details are not described herein again.

One end of the inductor 305 may be connected to the output end of the first switching component 301, and the other end of the inductor 305 may be connected to the output end of the third switching component 303.

In addition, in some possible implementations, the power converter 200 may further include a first capacitor C1 and a second capacitor C2. The first capacitor C1 may be connected between a positive electrode and the negative electrode of the input end of the power converter 200, and the second capacitor C2 may be connected between the positive electrode and the negative electrode of the output end of the power converter 200. It may be understood that the first capacitor C1 may filter the input voltage of the voltage input device 201, to reduce a ripple of the input voltage. The second capacitor C2 may filter the output voltage output by the power converter 200 to the voltage output device 202, so that the power converter 200 can continuously output a stable output voltage.

The first switching component 301, the second switching component 302, the third switching component 303, and the fourth switching component 304 provided in embodiments of this application may be any one or more of an insulated gate bipolar transistor (insulated gate bipolar transistor, IGBT), a metal-oxide-semiconductor field-effect transistor (metal-oxide-semiconductor field-effect transistor, MOSFET), a thyristor, a bipolar power transistor (bipolar power transistor), or a wide bandgap semiconductor field-effect transistor.

Optionally, the power converter 200 may further include a sampling circuit, and the sampling circuit is configured to determine a value of an output power of the power converter 200 that is output by the power converter 200 to the voltage output device 202. For example, the sampling circuit is configured to: collect a load current and a load voltage of the voltage output device 202, and determine the value of the output power of the power converter 200 based on the load current and the load voltage. The power converter 200 may control a switching component in the power converter 200 based on the output power of the power converter 200 that is determined by the sampling circuit.

The first switching component 301, the second switching component 302, the third switching component 303, and the fourth switching component 304 are controlled to be periodically turned on and off, so that the power converter 200 implements voltage conversion. The following separately describes a plurality of running modes of the power converter based on different output powers of the power converter 200.

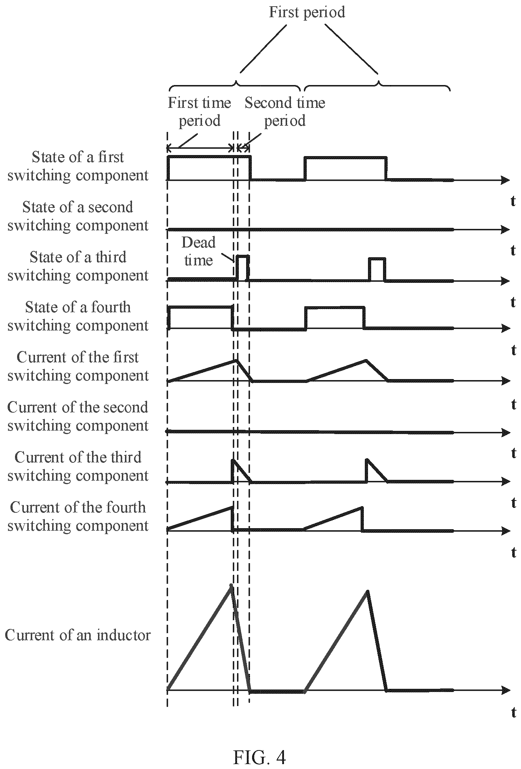

FIG. 4 is a timing diagram of states of switching components of the power converter running in a first mode.

When the output power of the power converter 200 is less than a first specified power, the power converter 200 runs in the first mode. The first specified power may be a working power of the voltage output device 202 in a startup state or a light-load state. The working power in the startup state or the light-load state is far less than a working power of the voltage output device 202 in a full-load state. A value of the first specified power may be freely set by a person skilled in the art based on a type and a specification of the voltage output device 202, and details are not described herein.

The first mode includes a plurality of first periods, and each first period includes a first time period and a second time period. Control timing of the first switching component 301, the second switching component 302, the third switching component 303, and the fourth switching component 304 may be specifically implemented with reference to the following descriptions:

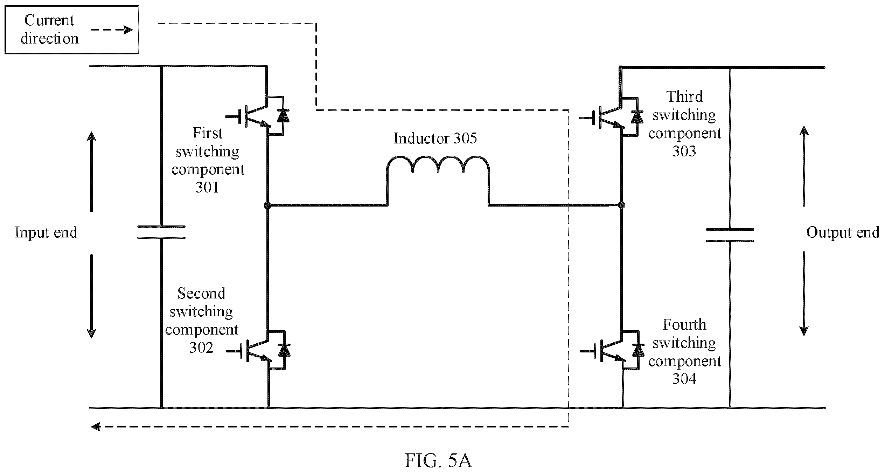

In the first time period of the first period in FIG. 4, the first switching component 301 and the fourth switching component 304 are turned on, and the second switching component 302 and the third switching component 303 are turned off. In this case, the voltage input device 201 charges the inductor 305. A current flow direction in which the voltage input device 201 charges the inductor 305 may be shown in FIG. 5A.

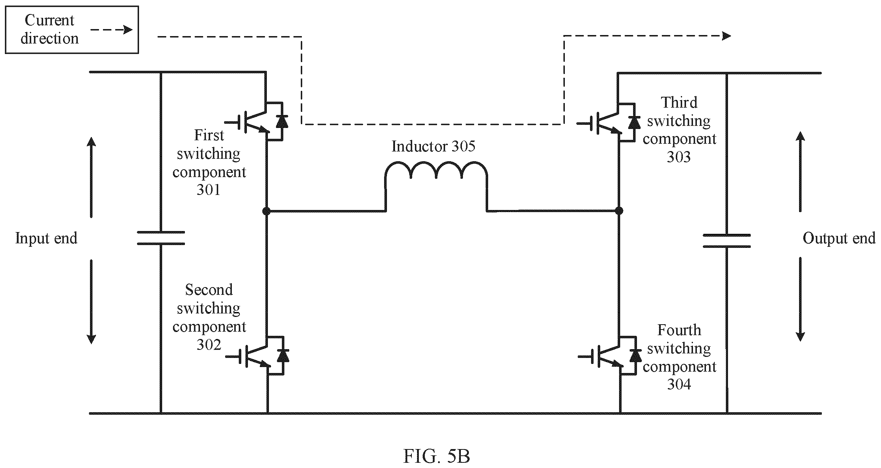

In the second time period of the first period in FIG. 4, the first switching component 301 and the third switching component 303 are turned on, and the second switching component 302 and the fourth switching component 304 are turned off. In this case, the voltage input device 201 and the inductor 305 charge the voltage output device 202. A current flow direction in which the voltage input device 201 and the inductor 305 charge the voltage output device 202 may be shown in FIG. 5B.

It may be understood that each first period includes the first time period and the second time period, and the second time period in each first period is after the first time period. In FIG. 4, to prevent a short circuit, the third switching component 303 and the fourth switching component 304 cannot be simultaneously turned on. Therefore, when the first time period is switched to the second time period, to prevent the third switching component 303 and the fourth switching component 304 from being simultaneously turned on, the third switching component 303 needs to be first turned off when the first time period ends, and the fourth switching component 304 can be turned on only after the third switching component 303 is turned off and when the second time period starts. A time period from the end of the first time period to the start of the second time period may also be referred to as a dead time, and using the dead time is a condition for ensuring that two switching components on a same side are not directly connected.

A state in which the first switching component 301 and the fourth switching component 304 in the power converter 200 are turned on needs to be adjusted to a state in which the first switching component 301 and the third switching component 303 are turned on. Because the inductor 305 has been charged, there is a current flowing from the output end of the first switching component 301 to the output end of the third switching component 303. In the dead time, the fourth switching component 304 is first turned off. After the fourth switching component 304 is turned off, because a turn-on direction of the third synchronization diode is consistent with a current direction on the power converter 200, a current that originally flows through the fourth switching component 304 changes a flow direction, and the current whose flow direction is changed flows from a cathode of the third synchronization diode to an anode of the third synchronization diode, so that the current bypasses the third switching component 303. The bypassed current causes voltages at two ends of the third switching component 303 to be zero (due to a parasitic parameter of the switching component, the voltages at the two ends may be very small voltage values close to zero). After the voltages at the two ends of the third switching component 303 are zero, the third switching component 303 is turned on, so that the third switching component can be softly turned on, thereby reducing a turn-on loss.

It should be noted that the foregoing embodiment is described based on a case in which the output voltage of the power converter that is output by the power converter 200 to the voltage output device 202 is not lower than the input voltage of the voltage input device 201, and the power converter 200 may be considered to be in a boost state.

When the output voltage of the power converter that is output by the power converter 200 to the voltage output device 202 is lower than the input voltage of the voltage input device 201, the power converter 200 may be considered to be in a buck state.

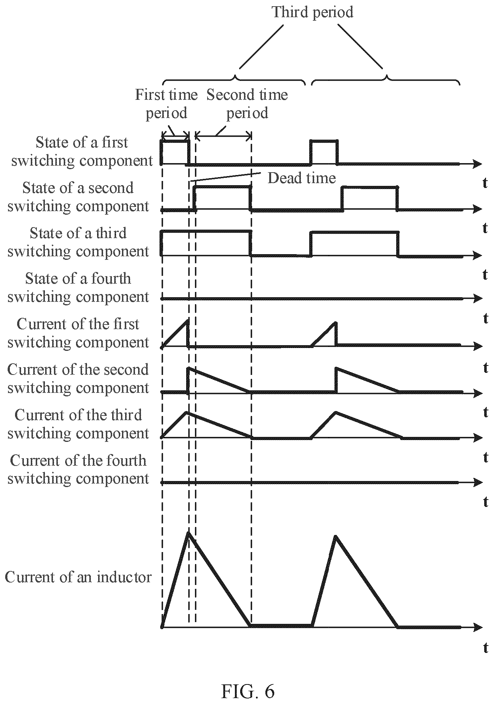

When the power converter 200 is in the buck state, the power converter 200 runs in a third mode. FIG. 6 is a timing diagram of states of switching components of the power converter 200 running in the third mode.

The third mode may also include a plurality of third periods, and each third period includes a first time period and a second time period. Control timing of the first switching component 301, the second switching component 302, the third switching component 303, and the fourth switching component 304 may be specifically implemented with reference to the following descriptions:

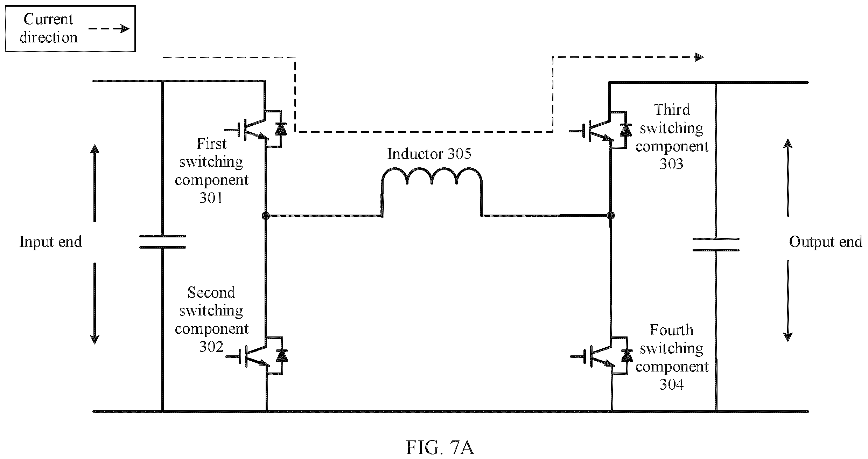

In the first time period of the third period in FIG. 6, the first switching component 301 and the third switching component 303 are turned on, and the second switching component 302 and the fourth switching component 304 are turned off. In this case, the voltage input device 201 and the inductor 305 charge the voltage output device 202. A current flow direction in which the voltage input device 201 and the inductor 305 charge the voltage output device 202 may be shown in FIG. 7A.

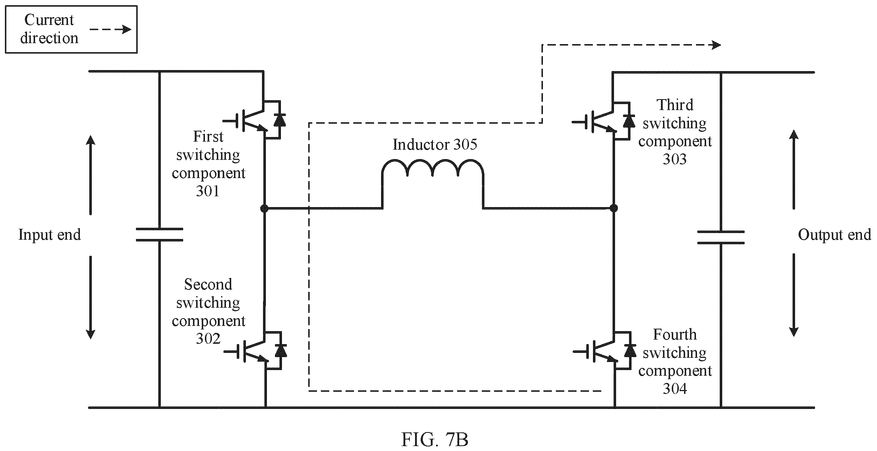

In the second time period of the third period in FIG. 6, the second switching component 302 and the third switching component 303 are turned on, and the first switching component 301 and the fourth switching component 304 are turned off. In this case, the inductor 305 charges the voltage output device 202. A current flow direction in which the inductor 305 charges the voltage output device 202 may be shown in FIG. 7B.

In FIG. 6, to prevent a short circuit, the first switching component 301 and the second switching component 302 cannot be simultaneously turned on. Therefore, when the first time period is switched to the second time period, to prevent the first switching component 301 and the second switching component 302 from being simultaneously turned on, the first switching component 301 needs to be first turned off when the first time period ends, and the second switching component 302 can be turned on only after the first switching component 301 is turned off and when the second time period starts. A time period from the end of the first time period to the start of the second time period is a dead time.

A state in which the first switching component 301 and the third switching component 303 in the power converter 200 are turned on needs to be adjusted to a state in which the second switching component 302 and the third switching component 303 are turned on. Because the inductor 305 has been charged, there is a current flowing from the output end of the first switching component 301 to the output end of the third switching component 303. In the dead time, the first switching component is first turned off. After the first switching component is turned off, because a turn-on direction of the second synchronization diode is consistent with a current direction on the power converter 200, a current that originally flows through the first switching component 301 changes a flow direction, and the current whose flow direction is changed flows from a cathode of the second synchronization diode to an anode of the second synchronization diode, so that the current bypasses the second switching component 302. The bypassed current causes voltages at two ends of the second switching component 302 to be zero (due to a parasitic parameter of the switching component, the voltages at the two ends may be very small voltage values close to zero). After the voltages at the two ends of the second switching component 302 are zero, the second switching component 302 is turned on, so that the second switching component 302 can be softly turned on, thereby reducing a turn-on loss.

Based on the description of the foregoing embodiment, when the output power of the power converter 200 that is output by the power converter 200 to the voltage output device 202 is less than a first specified power, and the output voltage of the power converter 200 that is output by the power converter 200 to the voltage output device 202 is not less than the input voltage, the power converter 200 is enabled to work in a boost state of a first mode. When the output power of the power converter 200 that is output by the power converter 200 to the voltage output device 202 is less than the first specified power, and the output voltage of the power converter 200 that is output by the power converter 200 to the voltage output device 202 is less than the input voltage, the power converter 200 is enabled to work in a buck state of the third mode. In this way, a person skilled in the art may control a working state of the power converter 200 based on the input voltage, the output power of the power converter 200, and a value of the output voltage of the power converter 200, to use soft turn-on to turn on or off the switching component in the power converter 200, thereby reducing a loss of the switching component in the power converter 200 as much as possible.

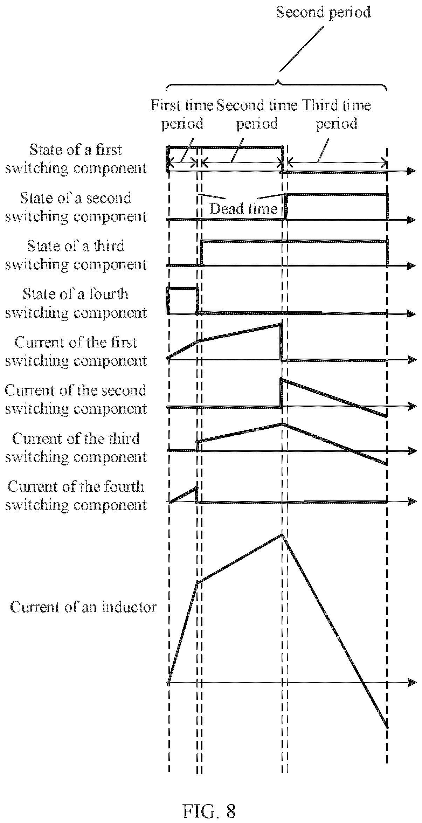

FIG. 8 is a timing diagram 1 of states of switching components of the power converter running in a second mode.

When the output power of the power converter 200 is greater than or equal to a first specified power, the power converter 200 runs in the second mode.

The second mode includes a plurality of second periods, and each second period includes a first time period, a second time period, and a third time period. Control timing of the first switching component 301, the second switching component 302, the third switching component 303, and the fourth switching component 304 may be specifically implemented with reference to the following descriptions:

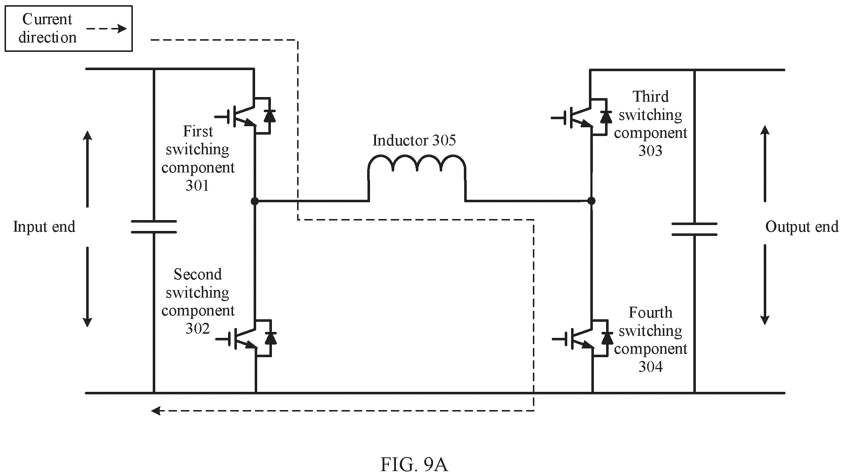

In the first time period of the second period in FIG. 8, the first switching component 301 and the fourth switching component 304 are turned on, and the second switching component 302 and the third switching component 303 are turned off. In this case, the voltage input device 201 charges the inductor 305. A current flow direction in which the voltage input device 201 charges the inductor 305 may be shown in FIG. 9A.

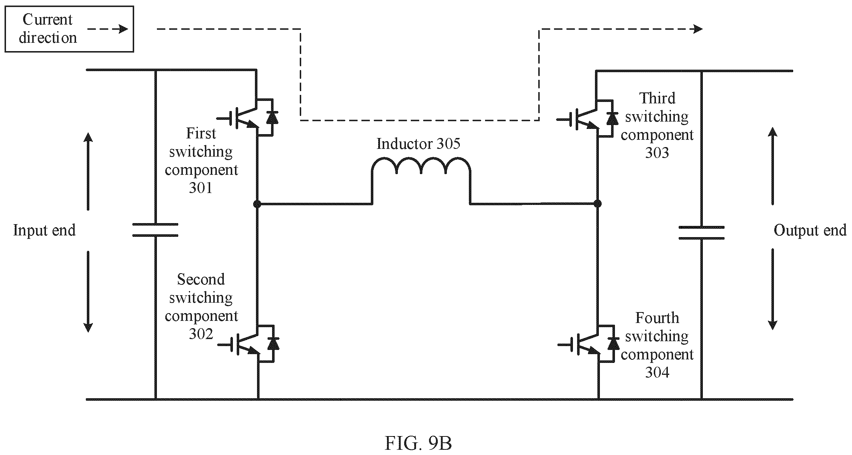

In the second time period of the second period in FIG. 8, the first switching component 301 and the third switching component 303 are turned on, and the second switching component 302 and the fourth switching component 304 are turned off. In this case, the voltage input device 201 and the inductor 305 charge the voltage output device 202. A current flow direction in which the voltage input device 201 and the inductor 305 charge the voltage output device 202 may be shown in FIG. 9B.

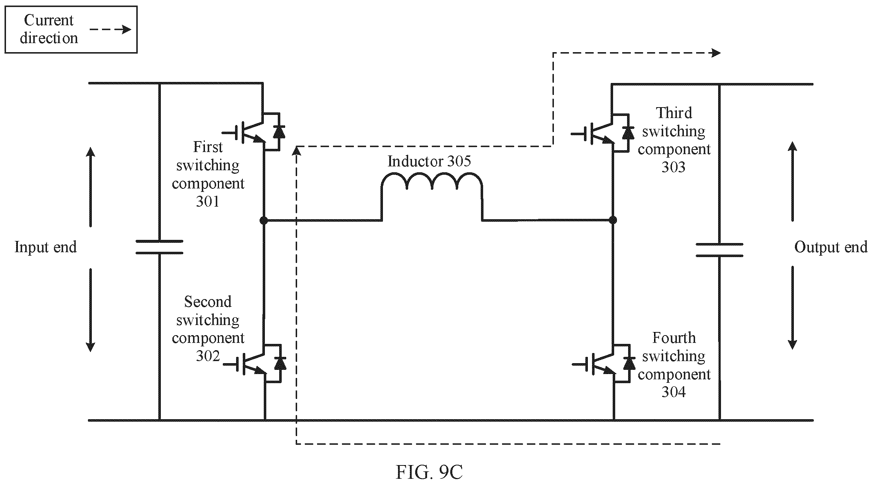

In the third time period of the second period in FIG. 8, the second switching component 302 and the third switching component 303 are turned on, and the first switching component 301 and the fourth switching component 304 are turned off. In this case, the inductor 305 charges the voltage output device 202. A current flow direction in which the inductor 305 charges the voltage output device 202 may be shown in FIG. 9C.

In FIG. 8, to prevent a short circuit, the first switching component 301 and the second switching component 302 cannot be simultaneously turned on, and the third switching component 303 and the fourth switching component 304 cannot be simultaneously turned on. Therefore, when the first time period is switched to the second time period, to prevent the third switching component 303 and the fourth switching component 304 from being simultaneously turned on, the third switching component 303 needs to be first turned off when the first time period ends, and the fourth switching component 304 can be turned on only after the third switching component 303 is turned off and when the second time period starts. When the second time period is switched to the third time period, to prevent the first switching component 301 and the second switching component 302 from being simultaneously turned on, the first switching component 301 needs to be first turned off when the second time period ends, and the second switching component 302 can be turned on only after the first switching component 301 is turned off and when the third time period starts. A time period from the end of the first time period to the start of the second time period, and a time period from the end of the second time period to the start of the third time period each may be referred to as a dead time.

When the first time period is switched to the second time period, a state in which the first switching component 301 and the fourth switching component 304 in the power converter 200 are turned on needs to be adjusted to a state in which the first switching component 301 and the third switching component 303 are turned on. Because the inductor 305 has been charged, there is a current flowing from the output end of the first switching component 301 to the output end of the third switching component 303. In a first dead time of the second period, the fourth switching component 304 is first turned off. After the fourth switching component 304 is turned off, because a turn-on direction of the third synchronization diode is consistent with a current direction on the power converter 200, a current that originally flows through the fourth switching component 304 changes a flow direction, and the current whose flow direction is changed flows from a cathode of the third synchronization diode to an anode of the third synchronization diode, so that the current bypasses the third switching component 303, and the bypassed current causes voltages at two ends of the third switching component 303 to be zero. After the voltages at the two ends of the third switching component 303 are zero, the third switching component 303 is turned on, so that the third switching component 303 can be softly turned on, thereby reducing a turn-on loss.

When the second time period is switched to the third time period, the state in which the first switching component 301 and the third switching component 303 in the power converter 200 are turned on needs to be adjusted to a state in which the second switching component 302 and the third switching component 303 are turned on. Because the inductor 305 has been charged, there is a current flowing from the output end of the first switching component 301 to the output end of the third switching component 303. In a second dead time of the second period, the first switching component 301 is first turned off. After the first switching component 301 is turned off, because a turn-on direction of the second synchronization diode is consistent with the current direction on the power converter 200, a current that originally flows through the first switching component 301 changes a flow direction, and the current whose flow direction is changed flows from a cathode of the second synchronization diode to an anode of the second synchronization diode, so that the current bypasses the second switching component 302, and the bypassed current causes voltages at two ends of the second switching component 302 to be zero. After the voltages at the two ends of the second switching component 302 are zero, the second switching component 302 is turned on, so that the second switching component 302 can be softly turned on, thereby reducing a turn-on loss.

Based on the description of the foregoing embodiment, when the output power of the power converter 200 that is output by the power converter 200 to the voltage output device 202 is greater than or equal to the first specified power, the power converter 200 works in a boost state of the second mode. Therefore, when the first time period in each second period is switched to the second time period, the third switching component 303 may implement soft turn-on, and when the second time period in the second period is switched to the third time period, the second switching component 302 may implement soft turn-on. In this way, a loss of the power converter 200 can be reduced.

On the premise that a value of the output voltage output by the power converter 200 to the voltage output device 202 remains unchanged and output powers of the power converter 200 are the same, the power converter 200 running in a first mode is compared with the power converter 200 running in the second mode. A peak current of the power converter 200 running in the first mode is higher, and a switching frequency of each switching component is lower. A peak current of the power converter 200 running in the second mode is lower, and a switching frequency of each switching component is higher.

Because the output voltage of the power converter 200 of the voltage output device 202 generally does not change greatly, when the output power of the power converter 200 is less than the first specified power, the power converter 200 needs to output a very small current, and the power converter 200 may run in the first mode. Compared with the second mode, the first mode reduces the switching frequency of each switching component. The switching frequency of each switching component in the power converter 200 working in the first mode is very low, and the power converter 200 needs to output the very small current. Therefore, a peak current flowing through the inductor 305 is not very large. In this way, the switching frequency of the switching component of the power converter 200 may be reduced, thereby reducing a loss. In addition, the peak current flowing through the inductor 305 is not very large, thereby reducing a volume and costs of the inductor 305.

When the output power of the power converter is greater than or equal to the first specified power, the power converter 200 needs to output a large current. The power converter 200 may run in the second mode. Compared with the first mode, the second mode reduces a value of the peak current flowing through the inductor 305, so that the peak current flowing through the inductor 305 is not very large, thereby reducing the volume and the costs of the inductor 305.

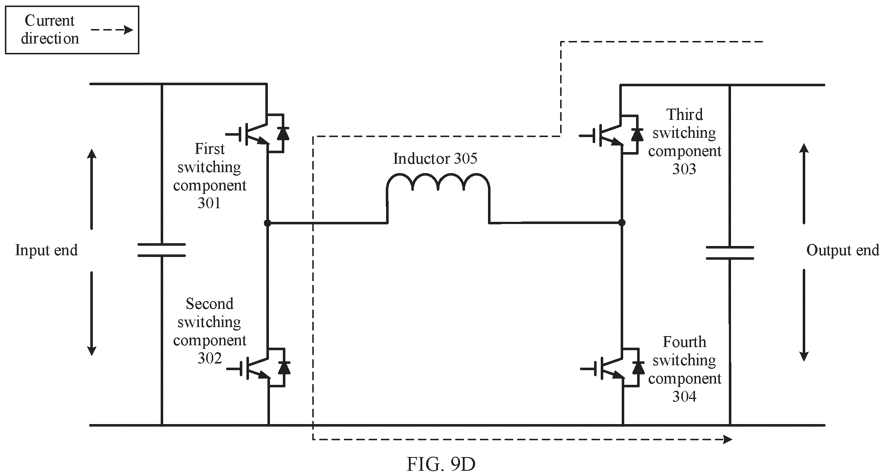

In a process of the third time period of the second period in FIG. 8, the inductor 305 first charges the voltage output device 202. After electric energy stored on the inductor 305 is released, because the second switching component 302 and the third switching component 303 are turned on, and the first switching component 301 and the fourth switching component 304 are turned off, the voltage output device 202 charges the inductor 305. A current flow direction in which the voltage output device 202 charges the inductor 305 may be shown in FIG. 9D.

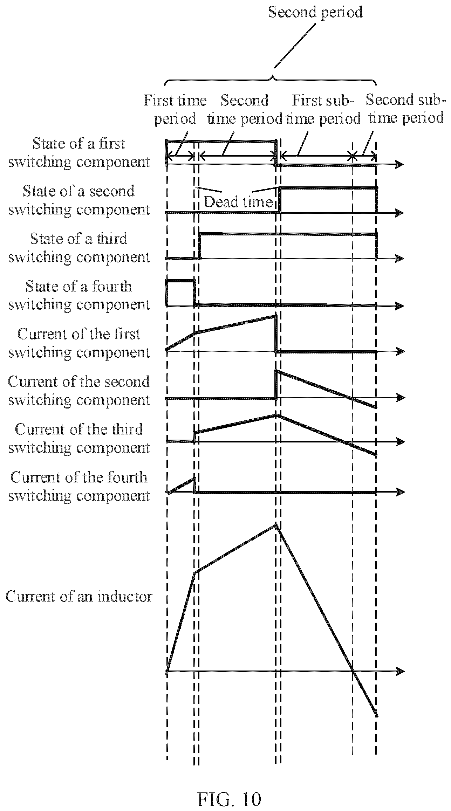

Therefore, each third time period may be further divided into a first sub-time period and a second sub-time period. FIG. 10 is a timing diagram 2 of states of switching components of the power converter running in a second mode.

In the first sub-time period of the third time period of the second period in FIG. 10, the second switching component 302 and the third switching component 303 are turned on, and the first switching component 301 and the fourth switching component 304 are turned off. In this case, the inductor 305 charges the voltage output device 202.

In the second sub-time period of the third time period of the second period in FIG. 10, the second switching component 302 and the third switching component 303 are turned on, and the first switching component 301 and the fourth switching component 304 are turned off. In this case, the voltage output device 202 charges the inductor 305.

In the first sub-time period, the inductor 305 discharges in a first direction, where the first direction is a direction from the output end of the first switching component 301 to the output end of the third switching component 303. In the second sub-time period, the inductor 305 discharges in a second direction, where the second direction is a direction from the output end of the third switching component 303 to the output end of the first switching component 301.

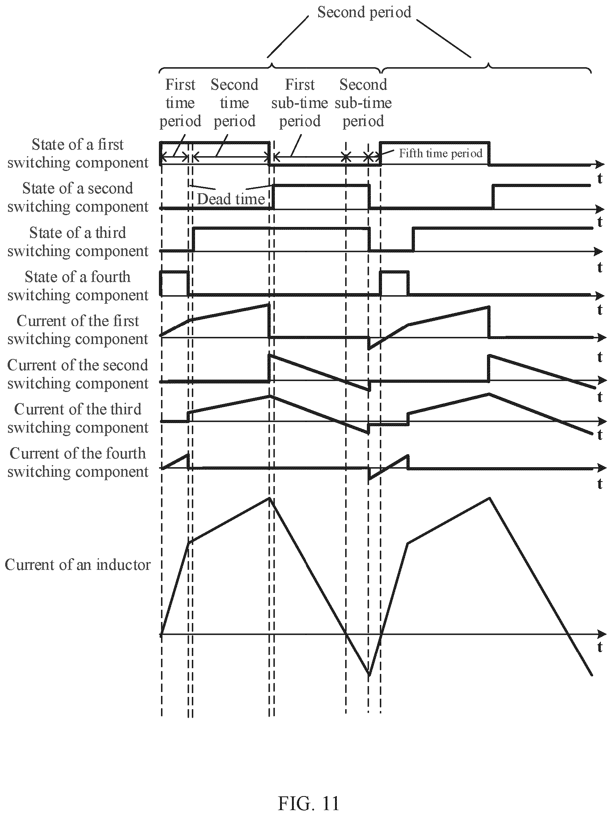

Based on a charging direction of the inductor 305, soft turn-on of the first switching component 301 can be implemented in this application. FIG. 11 is a timing diagram 3 of states of switching components of the power converter running in a second mode. The second period may further include a fifth time period.

In the fifth time period of the second period in FIG. 11, the second switching component 302 and the third switching component 303 are turned on, and the first switching component 301 and the fourth switching component 304 are turned off. Because the inductor 305 is in the second sub-time period, the inductor 305 discharges in a second direction, and a current on the inductor 305 cannot change abruptly. Therefore, when a fifth time period of a current second period is switched to a first time period of a next second period, a state in which the second switching component 302 and the third switching component 303 in the power converter 200 are turned on needs to be adjusted to a state in which the first switching component 301 and the fourth switching component 304 are turned on.

To prevent a short circuit, the first switching component 301 and the second switching component 302 cannot be simultaneously turned on. Therefore, when the fifth time period of the current second period is switched to the first time period of the next second period, the second switching component 302 needs to be first turned off when the fifth time period of the current second period ends, and the first switching component 301 can be turned on only after the second switching component 302 is turned off and when the first time period of the next second period starts. A time period from the fifth time period of the current second period to the first time period of the next second period may be referred to as a dead time.

Because the inductor 305 stores electric energy in the second direction, in a dead time between two adjacent second periods, the second switching component 302 is first turned off. After the second switching component 302 is turned off, both the first switching component 301 and the second switching component 302 are in an off state. Because the current on the inductor 305 cannot change abruptly, in this case, the inductor 305 charges a parasitic capacitance of the second switching component 302. After the parasitic capacitance of the second switching component 302 is charged, a voltage of the parasitic capacitance of the second switching component 302 gradually increases until the voltage is the same as the input voltage of the voltage input device 201. In this case, because voltages at two ends of the first switching component 301 are the same, the voltages at the two ends of the first switching component 301 are zero (because of a parasitic parameter of the switching component, the voltages at the two ends may be a very small voltage value close to zero). After the voltages at the two ends of the first switching component 301 are zero, the first switching component 301 is turned on, so that the first switching component 301 can be softly turned on, thereby reducing a turn-on loss.

The foregoing embodiment is described when the output power of the power converter 200 is greater than or equal to a first specified power, and the output voltage of the power converter 200 is not lower than the input voltage. When the output power of the power converter 200 is greater than or equal to the first specified power, and the output voltage of the power converter 200 is lower than the input voltage, a value relationship between the input voltage and the output voltage of the power converter 200 changes.

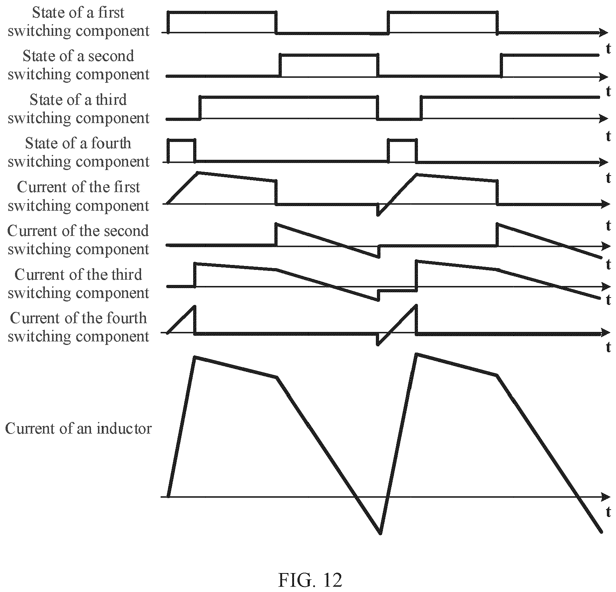

FIG. 12 is a timing diagram 4 of states of switching components of the power converter running in a second mode. A specific running logic is the same as the logic described in FIG. 8 to FIG. 11. The power converter shown in FIG. 8 to FIG. 11 is in a buck state, and the power converter shown in FIG. 12 is in a boost state. A person skilled in the art may set a duration of each time period in the second period based on a value relationship between the input voltage and the output voltage of the power converter 200.

It should be noted that, only when sufficient electric energy is stored in the inductor 305, it can be ensured that a voltage of a parasitic capacitance of the second switching component 302 increases until the voltage is the same as the input voltage of the voltage input device 201. In this way, a duration of the second sub-time period in the third time period needs to be set properly, so that the first switching component 301 can be finally softly turned on. A specific value of electric energy stored in the inductor 305 is related to the inductor 305 and a value of the parasitic capacitance of the second switching component 302. A person skilled in the art may properly set the duration of the second sub-time period based on the foregoing parameter.

For different output powers of the power converter 200, this application further performs more refined division on a running mode of the power converter 200.

When the output power of the power converter 200 is greater than or equal to a first specified power and less than a second specified power, a second period further includes a fourth time period, and the second specified power is greater than the first specified power. The second specified power may be set within a specified power range, and the specified power range is a power range from a working power of the voltage input device 201 in a startup state or a light-load state to a working power of the voltage input device 201 in a full-load state.

In other words, it may be understood that, when the output power of the power converter 200 is greater than or equal to the first specified power and less than the second specified power, the second period in the second mode includes: a first time period, a second time period, the third time period (the first sub-time period and the second sub-time period), the fourth time period, and a fifth time period.

When the output power of the power converter is greater than or equal to the second specified power, the second period in the second mode includes: a first time period, a second time period, the third time period (the first sub-time period and the second sub-time period), and a fifth time period. Because this case has been completely described in the foregoing embodiment, details are not described herein again.

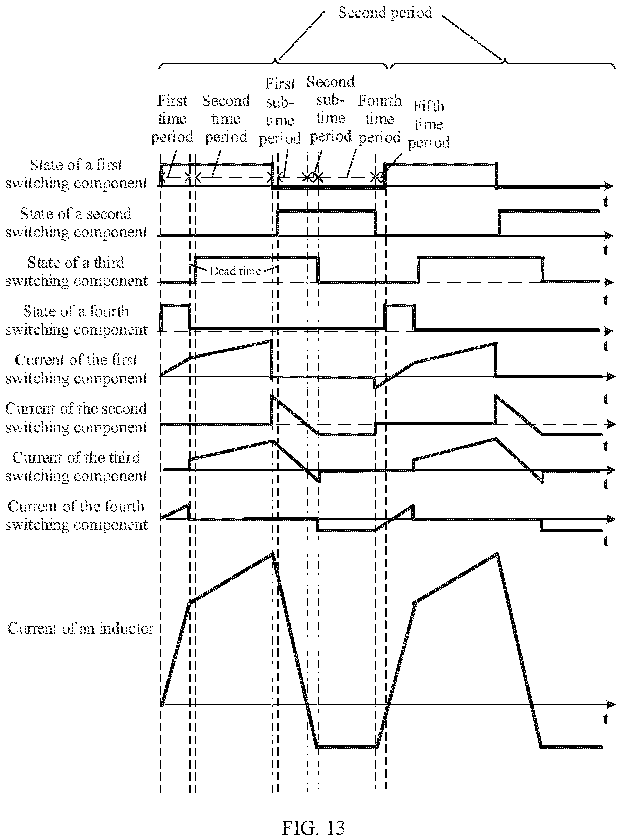

When the output power of the power converter is greater than or equal to the first specified power and less than the second specified power, FIG. 13 is a timing diagram 5 of states of switching components of the power converter running in a second mode.

In a first time period of a second period in FIG. 13, the first switching component 301 and the fourth switching component 304 are turned on, and the second switching component 302 and the third switching component 303 are turned off. In this case, the voltage input device 201 charges the inductor 305. A current flow direction in which the voltage input device 201 charges the inductor 305 may continue to be shown in FIG. 9A.

In a second time period of the second period in FIG. 13, the first switching component 301 and the third switching component 303 are turned on, and the second switching component 302 and the fourth switching component 304 are turned off. In this case, the voltage input device 201 and the inductor 305 charge the voltage output device 202. A current flow direction in which the voltage input device 201 and the inductor 305 charge the voltage output device 202 may continue to be shown in FIG. 9B.

In a first sub-time period of a third time period of the second period in FIG. 13, the second switching component 302 and the third switching component 303 are turned on, and the first switching component 301 and the fourth switching component 304 are turned off. In this case, the inductor 305 charges the voltage output device 202. A current flow direction in which the inductor 305 charges the voltage output device 202 may continue to be shown in FIG. 9C.

In a second sub-time period of the third time period of the second period in FIG. 13, the second switching component 302 and the third switching component 303 are turned on, and the first switching component 301 and the fourth switching component 304 are turned off. In this case, the voltage output device 202 charges the inductor 305. A current flow direction in which the voltage output device 202 charges the inductor 305 may continue to be shown in FIG. 9D.

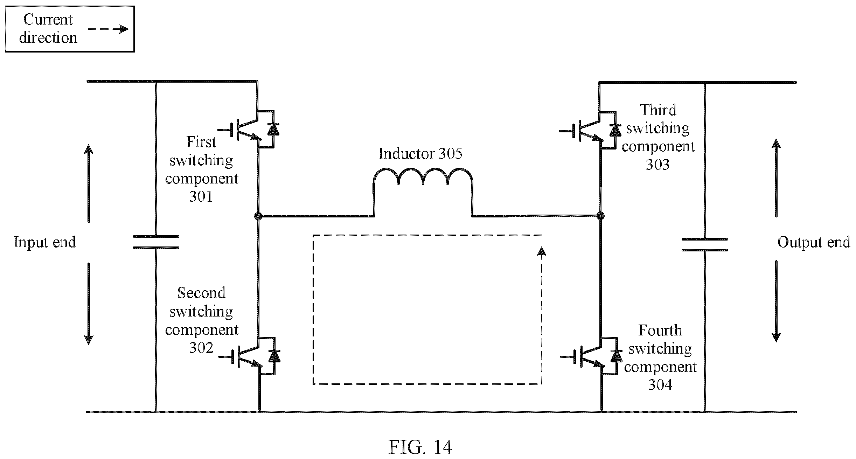

In a fourth time period of the second period in FIG. 13, the first switching component 301 and the third switching component 303 are turned off. Because types of switching components are different, specific turn-on manners of the switching components in the fourth time period are also different. If the fourth switching component 304 is an insulated gate bipolar transistor IGBT, the second switching component 302 is turned on, and a current freewheels from the turned-on second switching component 302 and the fourth synchronization diode. A current flow direction of freewheeling of the inductor 305 may be shown in FIG. 14.

If the fourth switching component 304 is a metal-oxide-semiconductor field-effect transistor MOS, the second switching component 302 and the fourth switching component 304 are turned on, and a current freewheels from the turned-on second switching component 302 and the turned-on fourth switching component 304.

In a fifth time period of the second period in FIG. 13, the second switching component 302 and the third switching component 303 are turned on, and the first switching component 301 and the fourth switching component 304 are turned off.

A purpose of setting the fourth time period in the second period is to reduce a switching frequency of each switching component in the power converter 200. After the fourth time period is set in the second period, a turn-on/off interval duration of the switching component in the power converter 200 increases, so that the switching frequency of the switching component in the power converter 200 is reduced, to meet requirements of a high power and a high voltage on the switching frequency of the switching component, thereby reducing a loss of the switching component. It may be understood that, in the fourth time period, the current freewheels from the turned-on second switching component 302, the turned-on fourth switching component 304, or the fourth synchronization diode. In this case, electric energy stored in the inductor 305 basically does not change.

In addition, when the output power of the power converter 200 is greater than or equal to the first specified power and less than the second specified power, durations of first time periods of any two second periods are the same, durations of second time periods of the any two second periods are the same, durations of third time periods of the any two second periods are the same, durations of fourth time periods of the any two second periods are the same, and durations of fifth time periods of the any two second periods are the same. In this way, the power converter 200 may run at a fixed frequency. The power converter 200 controlled by using the fixed frequency can simplify a circuit design and a control policy, and can provide more stable output than the power converter 200 controlled by using a variable frequency.

On the premise that a value of the output voltage of the power converter 200 that is output by the power converter 200 to the voltage output device 202 is unchanged and output powers of the power converter 200 are the same, the second mode with the fourth time period added is compared with the second mode without the fourth time period added:

In the second mode without the fourth time period added, a peak current flowing through the inductor 305 is higher, but a switching frequency of each switching component in the power converter 200 is lower; and
in the second mode with the fourth time period added, a peak current flowing through the inductor 305 is lower, but a switching frequency of each switching component in the power converter 200 is higher.

Because the output voltage of the power converter 200 of the voltage output device 202 generally does not change greatly, when the output power of the power converter 200 is less than the first specified power, the power converter 200 needs to output a small current, and the power converter 200 may run in the second mode without the fourth time period added. Compared with the second mode with the fourth time period added, the second mode without the fourth time period added reduces the switching frequency of each switching component. The switching frequency of each switching component in the power converter 200 working in the second mode with the fourth time period added is low, and the power converter 200 needs to output a small current. Therefore, a peak current flowing through the inductor 305 is not very large. In this way, the switching frequency of the switching component of the power converter 200 may be reduced, thereby reducing a loss. In addition, the peak current flowing through the inductor 305 is not very large, thereby reducing a volume and costs of the inductor 305.

When the output power of the power converter 200 is greater than or equal to the first specified power, the power converter 200 needs to output a large current. The power converter 200 may run in the second mode with the fourth time period added. Compared with the second mode without the fourth time period added, the second mode with the fourth time period added reduces a value of the peak current flowing through the inductor 305, so that the peak current flowing through the inductor 305 is not very large, thereby reducing the volume and the costs of the inductor 305.

A person skilled in the art may comprehensively consider an optimal running mode of the power converter 200 based on an upper limit of the switching frequency of the switching component in the power converter 200 and an upper limit of the peak current of the inductor 305, and details are not described herein again.

When the output power of the power converter 200 changes, a running mode of the power converter 200 also changes accordingly. In a possible implementation, in response to an increase of the output power of the power converter 200 to the first specified power, the power converter 200 turns off the first switching component, the second switching component, the third switching component, and the fourth switching component for a specified duration after a currently running first period of the power converter 200 ends, and the power converter 200 runs in the second mode after the specified duration.

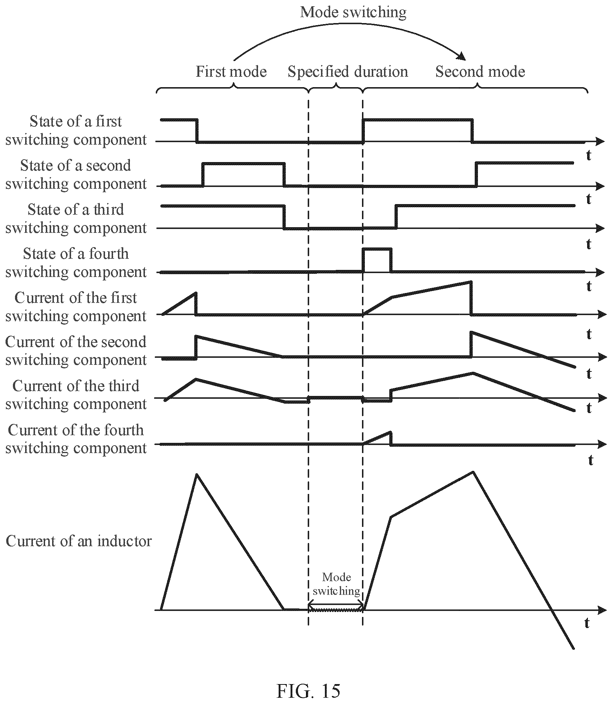

FIG. 15 is a timing diagram 1 of the power converter in a mode switching state. When the output power of the power converter 200 increases to a first specified power, a mode executed by the power converter 200 should also be switched from a first mode to a second mode. To ensure normal working of the voltage output device 202, a running mode of the power converter 200 needs to be switched to the second mode after a currently running first period ends. However, in consideration that the power converter 200 may have other control factors such as a residual charge and a residual magnetic field that are not completely released, the first switching component 301, the second switching component 302, the third switching component 303, and the fourth switching component 304 need to be turned off for a specified duration after the currently running first period ends, to ensure that the related charge and magnetic field are discharged, so as to avoid problems such as electromagnetic interference generated in a running mode switching process.

In response to a decrease of the output power of the power converter 200 to a third specified power, the first switching component 301, the second switching component 302, the third switching component 303, and the fourth switching component 304 are turned off for a specified duration after a currently running second period of the power converter 200 ends, and the power converter 200 runs in the first mode after the specified duration.

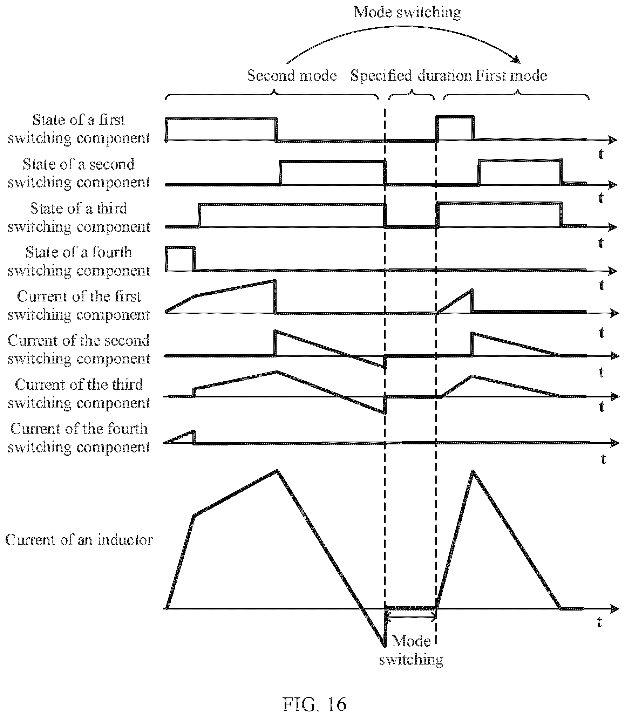

FIG. 16 is a timing diagram 2 of the power converter in a mode switching state.

When the output power of the power converter 200 decreases to a third specified power, a mode executed by the power converter 200 should also be switched from a second mode to a first mode. To ensure normal working of the voltage output device 202, a running mode of the power converter 200 needs to be switched to the first mode after a currently running second period ends. In consideration that the power converter 200 may have other control factors such as a residual charge and a residual magnetic field that are not completely released, the first switching component 301, the second switching component 302, the third switching component 303, and the fourth switching component 304 need to be turned off for a specified duration after a currently running first period ends, to ensure that the related charge and magnetic field are discharged, so as to avoid problems such as electromagnetic interference generated in a running mode switching process.

Similarly, when the power converter 200 runs in a third mode, and the output power of the power converter 200 increases to a first specified power, the mode executed by the power converter 200 should also be switched from the third mode to the second mode. When the power converter 200 runs in the second mode, and the output power of the power converter 200 decreases to the third specified power, the mode executed by the power converter 200 may also be switched from the second mode to the third mode. When two running modes are switched, the first switching component 301, the second switching component 302, the third switching component 303, and the fourth switching component 304 may also be turned off for a specified duration, to avoid problems such as electromagnetic interference generated in a running mode switching process.

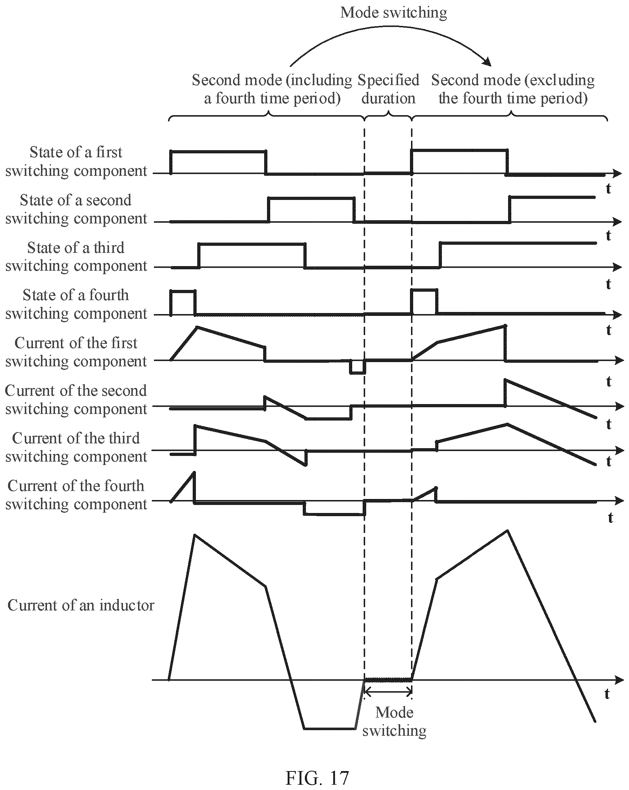

FIG. 17 is a timing diagram 3 of the power converter in a mode switching state. When the output power of the power converter 200 decreases to a third specified power, a mode executed by the power converter 200 should also be switched from a second mode with a fourth time period added to a second mode without a fourth time period added. After the currently running second mode with the fourth time period added finishes running, a running mode of the power converter 200 needs to be switched to the second mode without the fourth time period added. When two running modes are switched, the first switching component 301, the second switching component 302, the third switching component 303, and the fourth switching component 304 may also be turned off for a specified duration, to avoid problems such as electromagnetic interference generated in a running mode switching process. The third specified power is a first specified power minus a first threshold. The first threshold may be any value greater than zero, and the third specified power is less than the first specified power. A person skilled in the art may freely set a value of the third specified power based on an actual situation.

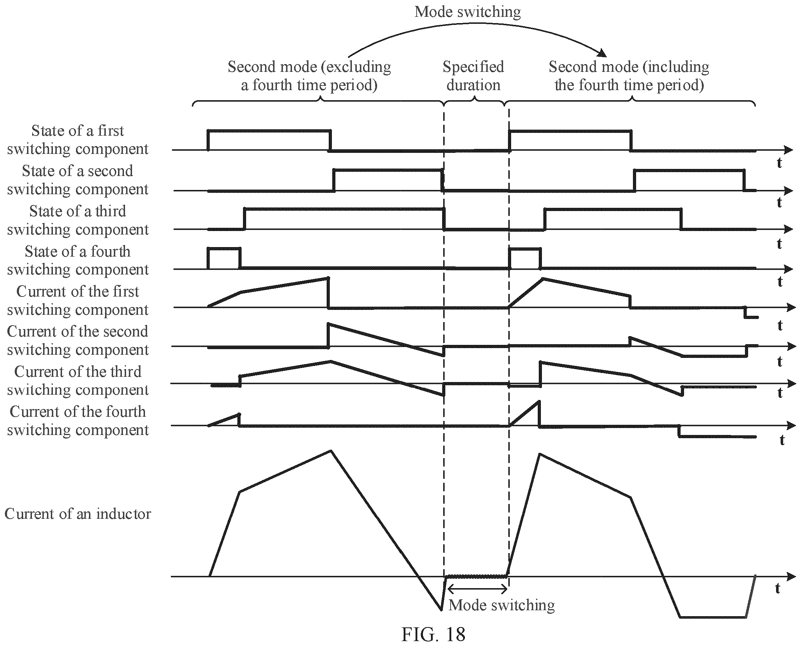

FIG. 18 is a timing diagram 4 of the power converter in a mode switching state. When the output power of the power converter 200 decreases to a third specified power, a mode executed by the power converter 200 should also be switched from a second mode without a fourth time period added to a second mode with a fourth time period added. After the currently running second mode without the fourth time period added finishes running, a running mode of the power converter 200 needs to be switched to the second mode with the fourth time period added. When two running modes are switched, the first switching component 301, the second switching component 302, the third switching component 303, and the fourth switching component 304 may also be turned off for a specified duration, to avoid problems such as electromagnetic interference generated in a running mode switching process.

In a possible implementation, the power converter 200 may further include a control circuit. It may be understood that the control circuit may be electrically connected to a control end of the first switching component 301, or may be connected to a control end of the first switching component 301 by using a signal. In other words, the control circuit may output a signal to the control end of the first switching component 301, so that the control circuit can control a status of the first switching component 301. For example, the control circuit may output a signal to the control end of the first switching component 301, to control the first switching component 301 to be turned on or off. For a control method of another switching component, refer to the description in the foregoing embodiment. Details are not described herein again. The control circuit controls the first switching component 301, the second switching component 302, the third switching component 303, and the fourth switching component 304, to control the power converter 200 to work in a first mode, a second mode, or a third mode.

The control circuit provided in embodiments of this application may be a logic circuit that can generate a control signal. For example, the control circuit may be a general-purpose central processing unit (central processing unit, CPU), a general-purpose processor, a digital signal processor (digital signal processor, DSP), an application-specific integrated circuit (application-specific integrated circuits, ASIC), a field programmable gate array (field programmable gate array, FPGA), a microcontroller unit (microcontroller unit, MCU) or another programmable logic device, a transistor logic device, a hardware component, or any combination thereof.

Based on a same concept, this application provides a power converter control method, and the method is applied to the power converter 200 provided in the foregoing embodiment. The method includes: when an output power of the power converter is less than a first specified power, controlling the power converter to run in a first mode, where the first mode includes a plurality of first periods, and each first period includes a first time period and a second time period; in the first time period of the first period, a first switching component and a fourth switching component are turned on, and a second switching component and a third switching component are turned off; and in the second time period of the first period, the first switching component and the third switching component are turned on, and the second switching component and the fourth switching component are turned off; or when an output power of the power converter is greater than or equal to a first specified power, controlling the power converter to run in a second mode, where the second control mode includes a plurality of second periods, and each second period includes a first time period, a second time period, and a third time period; in the first time period of the second period, a first switching component and a fourth switching component are turned on, and a second switching component and a third switching component are turned off; in the second time period of the second period, the first switching component and the third switching component are turned on, and the second switching component and the fourth switching component are turned off; and in the third time period of the second period, the second switching component and the third switching component are turned on, and the first switching component and the fourth switching component are turned off.

In a possible implementation, when the output power of the power converter is greater than or equal to the first specified power and less than a second specified power, the second period further includes a fourth time period; and in the fourth time period, the first switching component and the third switching component are turned off, and the second specified power is greater than the first specified power.

In a possible implementation, the third time period of the second period includes a first sub-time period and a second sub-time period, and the second period further includes a fifth time period; in the first sub-time period, an inductor discharges in a first direction, where the first direction is a direction from a second end of the first switching component to a second end of the third switching component; in the second sub-time period, the inductor is charged in a second direction, where the second direction is a direction from the second end of the third switching component to the second end of the first switching component; in the fifth time period of the second period, the inductor discharges in the second direction; and a first end of the first switching component is connected to a positive electrode of an input end of the power converter, a second end of the second switching component is connected to a negative electrode of the input end of the power converter, a first end of the third switching component is connected to a positive electrode of an output end of the power converter, a second end of the fourth switching component is connected to a negative electrode of the output end of the power converter, the second end of the first switching component is connected to a first end of the second switching component, the second end of the third switching component is connected to a first end of the fourth switching component, a first end of the inductor is connected to the second end of the first switching component, and a second end of the inductor is connected to the second end of the third switching component.

In a possible implementation, the inductor charges a parasitic capacitance of the second switching component in the fifth time period of the second period; and when the fifth time period of the second period ends, a voltage of the parasitic capacitance is the same as an input voltage.

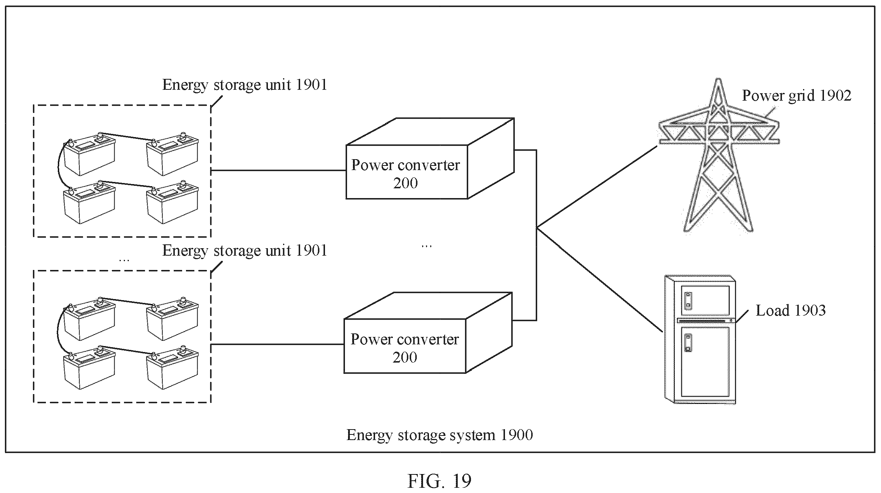

Based on a same concept, this application provides an energy storage system. Refer to FIG. 19. An energy storage system 1900 includes an energy storage unit 1901 and the power converter 200 in the foregoing embodiment. The energy storage unit 1901 includes a plurality of battery packs. The power converter 200 is configured to adjust a voltage input from the energy storage unit 1901, and output an adjusted voltage to a power grid 1902 or a load 1903.

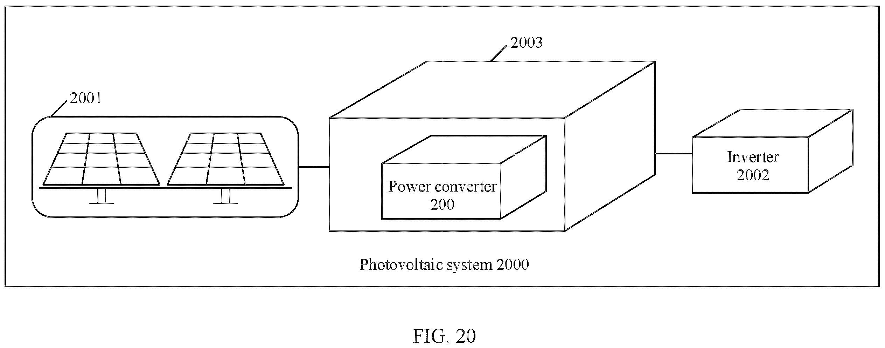

Based on a same concept, this application provides a photovoltaic system. Refer to FIG. 20. A photovoltaic system 2000 includes a photovoltaic module 2001, an inverter 2002, and a power optimizer 2003. The power optimizer 2003 includes the power converter 200 in the foregoing embodiment. An input end of the power converter 200 is configured to couple to the photovoltaic module 2001, an output end of the power converter 200 is coupled to the inverter 2002, and the power converter 200 is configured to adjust a voltage input from the photovoltaic module 2001, and output an adjusted voltage to the inverter 2002.

It is clearly that a person skilled in the art can make various modifications and variations to this application without departing from the scope of this application. This application is intended to cover these modifications and variations of this application provided that they fall within the scope of protection defined by the following claims and their equivalent technologies.

## Claims

1. A power converter, wherein the power converter comprises a first switching component, a second switching component, a third switching component, a fourth switching component, and an inductor, wherein
a first end of the first switching component is connected to a positive electrode of an input end of the power converter, a second end of the second switching component is connected to a negative electrode of the input end of the power converter, a first end of the third switching component is connected to a positive electrode of an output end of the power converter, a second end of the fourth switching component is connected to a negative electrode of the output end of the power converter, a second end of the first switching component is connected to a first end of the second switching component, a second end of the third switching component is connected to a first end of the fourth switching component, a first end of the inductor is connected to the second end of the first switching component, and a second end of the inductor is connected to the second end of the third switching component; and
when an output power of the power converter is less than a first specified power, the power converter runs in a first mode, wherein the first mode comprises a plurality of first periods, and each first period comprises a first time period and a second time period; in the first time period of the first period, the first switching component and the fourth switching component are turned on, and the second switching component and the third switching component are turned off; and in the second time period of the first period, the first switching component and the third switching component are turned on, and the second switching component and the fourth switching component are turned off; or
when an output power of the power converter is greater than or equal to the first specified power, the power converter runs in a second mode, wherein the second mode comprises a plurality of second periods, and each second period comprises a first time period, a second time period, and a third time period; in the first time period of the second period, the first switching component and the fourth switching component are turned on, and the second switching component and the third switching component are turned off; in the second time period of the second period, the first switching component and the third switching component are turned on, and the second switching component and the fourth switching component are turned off; and in the third time period of the second period, the second switching component and the third switching component are turned on, and the first switching component and the fourth switching component are turned off.

2. The power converter according to claim 1, wherein
when the output power of the power converter is greater than or equal to the first specified power and less than a second specified power, the second period further comprises a fourth time period; and in the fourth time period, the first switching component and the third switching component are turned off, and the second specified power is greater than the first specified power.

3. The power converter according to claim 2, wherein
the fourth switching component is an insulated gate bipolar transistor IGBT; and in the fourth time period, the second switching component is turned on, and the first switching component, the third switching component, and the fourth switching component are turned off.

4. The power converter according to claim 3, wherein
the fourth switching component is a metal-oxide-semiconductor field-effect transistor MOS; and in the fourth time period, the second switching component and the fourth switching component are turned on, and the first switching component and the third switching component are turned off.

5. The power converter according to any one of claims 1 to 4, wherein the third time period of the second period comprises a first sub-time period and a second sub-time period, and the second period further comprises a fifth time period;
in the first sub-time period, the inductor discharges in the first direction, wherein the first direction is a direction from the second end of the first switching component to the second end of the third switching component;
in the second sub-time period, the inductor is charged in a second direction, wherein the second direction is a direction from the second end of the third switching component to the second end of the first switching component; and
in the fifth time period of the second period, the inductor discharges in the second direction.

6. The power converter according to claim 5, wherein the inductor charges a parasitic capacitance of the second switching component in the fifth time period of the second period; and when the fifth time period of the second period ends, a voltage of the parasitic capacitance is the same as the input voltage.

7. The power converter according to claim 5 or 6, wherein
durations of first time periods of any two second periods are the same, durations of second time periods of the any two second periods are the same, durations of third time periods of the any two second periods are the same, durations of fourth time periods of the any two second periods are the same, and durations of fifth time periods of the any two second periods are the same.

8. The power converter according to any one of claims 1 to 7, wherein
in response to an increase of the output power of the power converter to the first specified power, after a currently running first period of the power converter ends, the first switching component, the second switching component, the third switching component, and the fourth switching component are turned off for a specified duration; and the power converter runs in the second mode after the specified duration.

9. The power converter according to any one of claims 1 to 8, wherein
in response to a decrease of the output power of the power converter to a third specified power, after a currently running second period of the power converter ends, the first switching component, the second switching component, the third switching component, and the fourth switching component are turned off for a specified duration; and the power converter runs in the first mode after the specified duration, wherein the third specified power is the first specified power minus a first threshold.

10. The power converter according to any one of claims 1 to 9, wherein
when the output power of the power converter is less than the first specified power and an output voltage of the power converter is not less than an input voltage, the power converter runs in the first mode, wherein the first mode comprises the plurality of first periods, and each first period comprises the first time period and the second time period; in the first time period of the first period, the first switching component and the fourth switching component are turned on, and the second switching component and the third switching component are turned off; and in the second time period of the first period, the first switching component and the third switching component are turned on, and the second switching component and the fourth switching component are turned off; or
when the output power of the power converter is less than the first specified power and an output voltage of the power converter is less than an input voltage, the power converter runs in a third mode, wherein the third mode comprises a plurality of third periods, and each third period comprises a first time period and a second time period; in the first time period of the third period, the first switching component and the third switching component are turned on, and the second switching component and the fourth switching component are turned off; and in the second time period of the third period, the second switching component and the third switching component are turned on, and the first switching component and the fourth switching component are turned off.

11. The power converter according to any one of claims 1 to 10, wherein the power converter further comprises a control circuit, wherein
the control circuit is configured to:
when the output power of the power converter is less than the first specified power, control the power converter to run in the first mode; or
when the output power of the power converter is greater than or equal to the first specified power, control the power converter to run in the second mode.

12. A power converter control method, applied to a power converter, wherein
the method comprises:
when an output power of the power converter is less than a first specified power, controlling the power converter to run in a first mode, wherein the first mode comprises a plurality of first periods, and each first period comprises a first time period and a second time period; in the first time period of the first period, a first switching component and a fourth switching component are turned on, and a second switching component and a third switching component are turned off; and in the second time period of the first period, the first switching component and the third switching component are turned on, and the second switching component and the fourth switching component are turned off; or
when an output power of the power converter is greater than or equal to the first specified power, controlling the power converter to run in a second mode, wherein the second control mode comprises a plurality of second periods, and each second period comprises a first time period, a second time period, and a third time period; in the first time period of the second period, a first switching component and a fourth switching component are turned on, and a second switching component and a third switching component are turned off; in the second time period of the second period, the first switching component and the third switching component are turned on, and the second switching component and the fourth switching component are turned off; and in the third time period of the second period, the second switching component and the third switching component are turned on, and the first switching component and the fourth switching component are turned off.

13. The control method according to claim 12, wherein
when the output power of the power converter is greater than or equal to the first specified power and less than a second specified power, the second period further comprises a fourth time period; and in the fourth time period, the first switching component and the third switching component are turned off, and the second specified power is greater than the first specified power.

14. The control method according to claim 12 or 13, wherein the third time period of the second period comprises a first sub-time period and a second sub-time period, and the second period further comprises a fifth time period;
in the first sub-time period, the inductor discharges in the first direction, wherein the first direction is a direction from a second end of the first switching component to a second end of the third switching component;
in the second sub-time period, the inductor is charged in a second direction, wherein the second direction is a direction from the second end of the third switching component to the second end of the first switching component;
in the fifth time period of the second period, the inductor discharges in the second direction; and
a first end of the first switching component is connected to a positive electrode of an input end of the power converter, a second end of the second switching component is connected to a negative electrode of the input end of the power converter, a first end of the third switching component is connected to a positive electrode of an output end of the power converter, a second end of the fourth switching component is connected to a negative electrode of the output end of the power converter, the second end of the first switching component is connected to a first end of the second switching component, the second end of the third switching component is connected to a first end of the fourth switching component, a first end of the inductor is connected to the second end of the first switching component, and a second end of the inductor is connected to the second end of the third switching component.

15. The control method according to claim 14, wherein the inductor charges a parasitic capacitance of the second switching component in the fifth time period of the second period; and when the fifth time period of the second period ends, a voltage of the parasitic capacitance is the same as the input voltage.
